# EUROPÄISCHE PATENTSCHRIFT

(11) **EP 0 349 722 B1**
(45) Veröffentlichungstag und Bekanntmachung des Hinweises auf die Patenterteilung: **16.03.1994**
(21) Anmeldenummer: 89107324.9
(22) Anmeldetag: 22.04.1989
(51) Int. Cl.: F16C 19/30

(54) **Axialnadellager-Bauelement**
Axial needle bearing
Palier axial à aiguilles

(30) Priorität: 06.07.1988 DE 3822779
(43) Veröffentlichungstag der Anmeldung: 10.01.1990
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Graef, Kurt, D-5024 Pulheim (DE); Premiski, Vladimir, D-5358 Bad-Muenstereifel-Willerscheid (DE); Biedermann, Sieghart, D-5024 Pulheim (DE); Premiski, Claudia, D-5358 Bad-Muenstereifel-Willerscheid (DE)
(74) Vertreter: Messulam, Alec Moses

(56) Entgegenhaltungen:
- EP-A- 0 153 662
- DE-A- 2 753 812
- DE-A- 3 643 584
- FR-A- 370 427
- FR-A- 1 446 492
- FR-A- 2 320 454
- FR-A- 2 496 790
- GB-A- 1 187 290
- US-A- 4 042 285

## Beschreibung

Die Erfindung bezieht sich auf ein Axialnadellager-Bauelement der im Oberbegriff des Patentanspruches erläuterten Art.

Aus der DE-A-27 53 812 ist ein Axialnadellager-Bauelement mit ungeführten Nadeln und aus gestanztem und gezogenem Blech bestehenden Lageranlaufscheiben bekannt, die an ihrem Außen- und Innenumfang mit aufeinander zugerichteten, etwa rechtwinklig abgebogenen Hülsenansätzen versehen sind, mit denen eine ringförmige Kappe zusammenwirkt, um ein bei der Montage einfacher zu handhabendes Axialnadellager-Bauelement zu bilden.

Das bekannte Axialnadellager-Bauelement weist den Nachteil auf, daß die ringförmige Kappe zusätzlich angeordnet werden muß, um das leichter handhabbare Axialnadellager-Bauelement zu bilden.

Aus der DE-A-36 43 584 sind eine Vielzahl von Axialnadellager-Bauelementen bekannt, bei denen in einem Nadelkäfig aus Blech geführte Nadeln mit ausgestanzten und gezogenem Blech bestehenden Lageranlaufscheiben zusammenwirken, die an ihrem Außenumfang und/oder ihrem Innenumfang mit aufeinander zugerichteten, etwa rechtwinklig abgebogenen Hülsenansätzen versehen sind, die mit nach radial innen oder radial außen gerichteten konischen Ringkanten mit dem Nadelkäfig aus Blech zusammenwirken, um ein bei der Montage leicht handhabbares Axialnadellager-Bauelement zu bilden.

Bei dem bekannten Axialnadellager-Bauelement sind darüber hinaus weitere sich axial erstreckende Lappen zum Innen-oder Außenzentrieren der Lageranlaufscheiben vorgesehen.

Die Aufgabe der Erfindung ist es, ein Axialnadellager-Bauelement gemäß der im Oberbegriff des Patentanspruches 1 erläuterten Art derart zu verbessern, daß es nicht nur während der Montage einfacher handhabbar ist, sondern daß es darüber hinaus ohne Beeinträchtigung der Funktion sowohl mit der einen Anlaufscheibe als auch mit der anderen Anlaufscheibe an dem einen, es außen zentrierenden Bauteil angeordnet werden kann.

Gemäß der Erfindung wird diese Aufgabe gelöst, indem ein Axialnadellager-Bauelement gemäß dem Oberbegriff des Patentanspruches die im Kennzeichenteil des Patentanspruches aufgezeigten Merkmale aufweist.

Dadurch, daß der eine Hülsenansatz der einen Anlaufscheibe zylindrisch und der andere Hülsenansatz der anderen Anlaufscheibe konisch nach innen ragend ausgebildet ist und den einen Hülsenansatz innen axial übergreift und über an z.B. vier am Umfang verteilten Stellen durch radial nach außen gedrückte Sicken oder Nasen mit diesem axial mit Spiel aber axial nicht trennbar verbunden ist, können die freien ebenen Außenumfänge beider Lageranlaufscheiben mit genau dem gleichen Durchmesser und der gleichen Fassung hergestellt werden, wie sie für die Zentrierung an dem einen Bauteil vorgesehen ist.

Die Erfindung wird anhand eines Ausführungsbeispieles näher erläutert. Es zeigt:

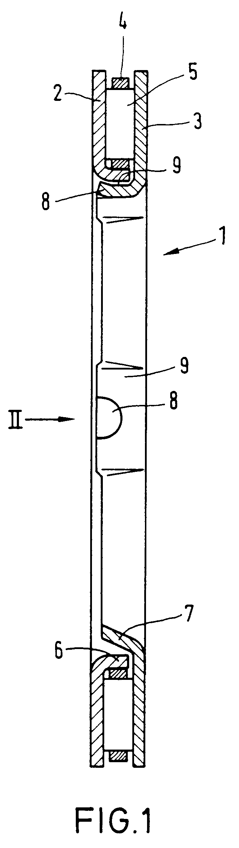

- Fig. 1: einen vergrößerten vertikalen Schnitt durch ein erfindungsgemäßes Axialnadellager-Bauelement und

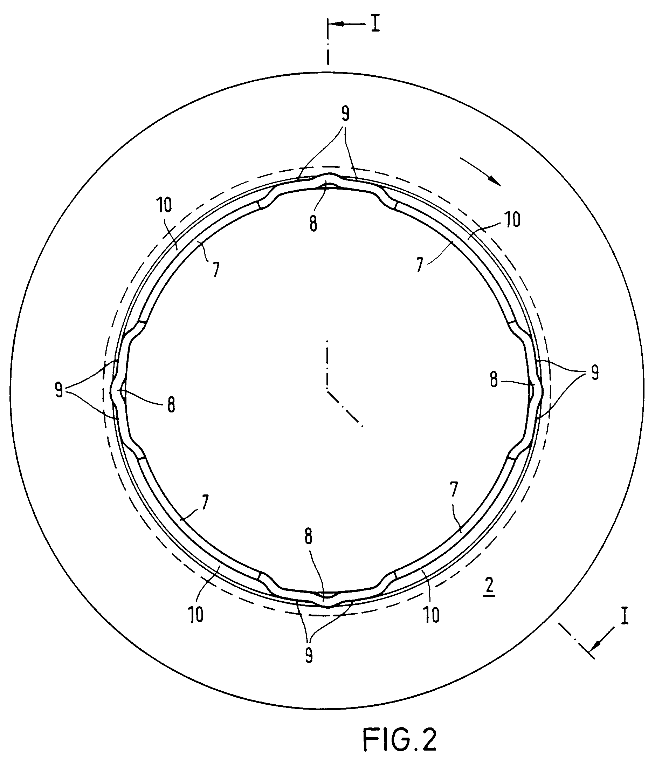

- Fig. 2: eine Ansicht des Axialnadellager-Bauelementes in Fig. 1 in Richtung des Pfeiles II.

Das Axialnadellager-Bauelement 1 besteht aus einer ausgestanzten und aus gezogenem Blech hergestellten Lageranlaufscheibe 2 und einer ebensolchen gegenüberliegenden Lageranlaufscheibe 3.

Zwischen den beiden Lageranlaufscheiben 2 und 3 ist ein Nadelkäfig 4 aus Blech angeordnet, der eine Vielzahl von Nadeln 5 führt.

Die eine Lageranlaufscheibe 2 ist an ihrem Innenumfang mit einem rechtwinklig abgebogenen Hülsenansatz 6 versehen, der sich zur anderen Anlaufscheibe 3 hin erstreckt.

Die andere Lageranlaufscheibe 3 ist an ihrem Innenumfang mit einem konisch nach innen ragenden Hülsenansatz 7 versehen, der den Hülsenansatz 6 innen axial übergreift.

An z.B. vier am Umfang verteilten Stellen ist der konische Hülsenansatz 7 durch radial nach außen gedrückte Sicken oder Nasen 8 derart verformt, daß er mit dem anderen Hülsenansatz 6 axial mit Spiel aber axial nicht mehr trennbar verbunden ist.

Benachbart der Sicken oder Nasen 8 sind zylindrische Teilkreis-Führungsflächen 9 am konischen Hülsenansatz 7 vorgesehen, über die der zylindrische Hülsenansatz 6 die Lageranlaufscheibe 2 gegenüber der Lageranlaufscheibe 3 radial zentriert und führt.

Die am Umfang zwischen den Führungsflächen 9 liegenden Teile des konischen Hülsenansatzes 7 der Lageranlaufscheibe 3 bilden in axialer Richtung liegende Auffangtrichter 10 für Schmiermittel, das radial innen in den Bereich der Nadeln eintreten kann.

## Patentansprüche

1. Axialnadellager-Bauelement (1) mit in einem Nadelkäfig (4) aus Blech geführten Nadeln (5) und aus gestanzten und gezogenem Blech bestehenden Lageranlaufscheiben (2, 3), die an ihrem Innenumfang mit aufeinander zugerichteten etwa rechtwinklig abgebogenen Hülsenansätzen (6, 7) versehen sind, **dadurch gekennzeichnet**, daß der eine Hülsenansatz (6) der einen Anlaufscheibe (2) zylindrisch ausgebildet ist und der andere Hülsenansatz (7) der anderen Anlaufscheibe (3) konisch nach innen ragend ausgebildet ist und den einen Hülsenansatz (6) innen axial übergreift und über an z.B. vier am Umfang verteilten Stellen durch radial nach außen gedrückte Sicken oder Nasen (8) mit diesem axial mit Spiel aber axial nicht trennbar verbunden ist.

2. Axialnadellager-Bauelement nach Anspruch 1, **dadurch gekennzeichnet**, daß am konischen Hülsenansatz (7) benachbart den Nasen (8) Teilkreis-Führungsflächen (9) ausgebildet sind, die mit dem Innenumfang des zylindrischen Hülsenansatzes (6) zentrierend zusammenwirken.

## Claims

1. An axial needle-bearing element (1) with needles (5) guided in a needle cage (4) of sheet metal and thrust washers (2, 3) which consist of punched and drawn sheet metal which are provided on their inner periphery with sleeve attachments (6, 7) which are orientated towards one another and bent approximately at right angles, characterized in that one sleeve attachment (6) of one thrust washer (2) is made cylindrical and the other sleeve attachment (7) of the other thrust washer (3) is made projecting inwards in a tapered manner and engages axially inwardly over one sleeve attachment (6) and is connected to the latter with play axially but not detachably axially by way of [at]* for example four points distributed over the periphery by beads or studs (8) pressed radially outwards.

2. An axial needle-bearing element according to Claim 1, characterized in that arcuate guide surfaces (9), which cooperate with the inner periphery of the cylindrical sleeve attachment (6) so as to centre it, are formed on the tapered sleeve attachment (7) adjacent the beads (8).

## Revendications

1. Elément de construction pour palier de butée à aiguilles (1) comprenant des aiguilles (5) qui sont guidées dans une cage à aiguilles en tôle (4) et des disques de roulement (2, 3) qui sont constitués par de la tôle estampée et emboutie et qui sont pourvus sur leur pourtour intérieur de prolongements (6, 7) en forme de manchon, ceux-ci étant dirigés l'un vers l'autre et pliés à peu près à angle droit, caractérisé par le fait que l'un (6) des prolongement en forme de manchon de l'un (2) des disques de roulement est réalisé en forme de cylindre, et que l'autre prolongement en forme de manchon (7) de l'autre disque de roulement (3) est réalisé sous la forme d'un cône faisant saillie vers l'intérieur, qu'il recouvre intérieurement dans le sens axial le premier prolongement (6) en forme de manchon et que, par l'intermédiaire de moulures ou de becs (8) qui sont enfoncés radialement vers l'extérieur dans le sens radial en quatre endroits, par exemple, répartis sur le pourtour, il est relié à celui-ci avec un jeu dans le sens axial, mais sans pouvoir en être séparé dans le sens axial.

2. Elément de construction pour palier de butée à aiguilles selon la revendication 1, caractérisé par le fait que des surfaces de guidage (9) en forme d'arcs de cercle sont formées sur le prolongement conique (7) en forme de manchon, au voisinage des becs (8), et qu'elles coopèrent en vue du centrage avec le pourtour intérieur du prolongement cylindrique (6) en forme de manchon.
